# EUROPÄISCHE PATENTSCHRIFT

(11) **EP 3 351 838 B1**
(45) Veröffentlichungstag und Bekanntmachung des Hinweises auf die Patenterteilung: **13.05.2020**
(21) Anmeldenummer: 18151759.0
(22) Anmeldetag: 16.01.2018
(51) Int. Cl.: F16K 37/00, G01H 9/00, H04R 1/02, H04R 23/00, G01M 3/24, G01M 3/38

(54) **OPTISCHES MIKROFON ZUR DIAGNOSE VON STELLGERÄTEN**
OPTICAL MICROPHONE FOR DIAGNOSIS OF POSITIONING DEVICES
MICROPHONE OPTIQUE DESTINÉ AU DIAGNOSTIC D' APPAREILS DE RÉGLAGE

(30) Priorität: 18.01.2017 DE 102017100956
(43) Veröffentlichungstag der Anmeldung: 25.07.2018
(73) Patentinhaber: Samson Aktiengesellschaft, 60314 Frankfurt am Main (DE)
(72) Erfinder: Widl, Andreas, 81675 München (DE); Widl, Gerhard, 82340 Feldafing (DE); Unland, Stefan, 63065 Offenbach (DE); Schwab, Uwe, 67574 Osthofen (DE)
(74) Vertreter: Schmid, Nils T.F.

(56) Entgegenhaltungen:
- EP-A1- 3 039 329
- WO-A1-02/077733
- WO-A1-2011/083760
- DE-A1-102006 013 345
- DE-A1-102006 055 747
- JP-A- S6 018 100
- US-A1- 2014 005 958
- Psw Staff: "Sennheiser Introduces Optical Microphone For Industrial & Medic", , 9. März 2009 (2009-03-09), Seiten 1-6, XP055481546, Gefunden im Internet: URL:https://www.prosoundweb.com/types/news /sennheiser_introduces_optical_microphone_ for_industrial_medical_application/ [gefunden am 2018-06-06]

## Beschreibung

Die Erfindung betrifft ein Stellventil nach Anspruch 1 und eine prozesstechnische Anlage nach Anspruch 10. Die Erfindung umfasst ein Diagnosesystem zum Kontrollieren der Funktionsfähigkeit eines Stellgeräts einer prozesstechnischen Anlage, wie einer chemischen Anlage, einer lebensmittelverarbeitenden Anlage, eines Kraftwerks oder dergleichen. Das Stellgerät ist ein Stellventil, wie ein Notschließstellventil oder ein Regelungsventil, über das eine Mediumströmung, insbesondere eine Fluidströmung, der prozesstechnischen Anlage gesteuert und eingestellt werden kann. Das Stellgerät kann auch mit Hilfsenergie, wie Pneumatik, betrieben werden, wobei insbesondere der Stellantrieb über einen insbesondere elektropneumatischen Stellungsregler betätigt werden kann. Des Weiteren betrifft die Erfindung das Stellgerät als solches, das das Diagnosesystem des Stellventils umfasst. Insbesondere betrifft die Erfindung ein Feldgerät einer prozesstechnischen Anlage, mit dem die Prozessmediumströmung geregelt werden kann. Das Feldgerät ist ein in die prozesstechnische Anlage integriertes Stellgerät, das beispielsweise neben einem Stellventil, ein Stellantrieb und gegebenenfalls eine den Stellantrieb steuernde Elektronikeinheit umfasst, wobei auch beispielsweise eine Pumpe in Kombination geschaltet sein kann. Die Prozessmediumströmung kann eine Prozessfluidströmung sein, die bei der Verarbeitung in Großanlagen dem Explosionsschutz unterliegt. Das erfindungsgemäße Diagnosesystem soll insbesondere den Voraussetzungen der Sicherheitstechnik zur Verhütung von Explosionen genügen, wobei Zündschutzarten gemäß Normen, wie IEC, EN, ATEX oder NEC, definiert sind.

Stellgeräte, wie Stellventile, welche die Prozessmediumströmung der prozesstechnischen Anlage beeinflussen, insbesondere steuern und/oder regeln, können kritische Betriebszustände einnehmen. Bei Stellventilen sind dies beispielsweise Leckage oder Kavitation, welche mit einer charakteristischen Schallemission einhergehen. Es ist bekannt, die Schallemissionen des Stellgeräts akustisch aufzunehmen und auszuwerten. Eine Früherkennung von Stellgerätschäden ist zu erreichen, um einen vollständigen Ausfall des Stellgeräts oder eine Unterbrechung des Anlagebetriebs beispielsweise aufgrund von akuten Wartungs- und Reparaturarbeiten an der prozesstechnischen Anlage zu vermeiden.

Ein Diagnosesystem für Regel- und Absperrventile einer prozesstechnischen Anlage ist beispielsweise aus EP 0 637 713 A1 bekannt. Das Diagnosesystem bedient sich an einem Elektronikprozessor eines Stellungsreglers, der mit einem Körperschallsensor verbunden ist, der ein Ventiloberteil abhört und Messdaten zur Ermittlung von Kavitation erzeugt. Bei einer unzulässigen Abweichung der gemessenen Schallwerte von zuvor bei einwandfreiem Betrieb des Regelventils aufgenommenen Vergleichsmesswerten, wird ein Alarmsignal ausgegeben. Aufgrund der direkten Anordnung des Körperschallsensors an dem Ventiloberteil ist das Diagnosesystem anfällig für Fehlalarme, weil der Ursprung des Schalls nur mit einem erhöhten Diagnoseaufwand identifizierbar ist.

Ein Diagnosesystem für einen Stellungsregler eines Stellventils einer prozesstechnischen Anlage ist auch aus DE 199 24 377 B4 bekannt, wobei ein Körperschallsensor unmittelbar an der Außenseite des Stellventilgehäuses angebracht ist. Es wird ein Körperschallspektrum bei geringfügig geöffnetem Stellventil aufgenommen und in Betrieb bei geschlossen gestelltem Ventil verglichen. Nach Vergleich beider Messwerte kann ein Rückschluss auf die Dichtigkeit oder Leckage des Stellventils getroffen werden. Auch bei diesem Diagnosesystem ist nicht von einer hohen Zuverlässigkeit auszugehen.

Gemäß EP 1 216 375 B2 wird die Anbringung eines Schallaufnehmers am Joch vorgeschlagen, i.e. an einem Verbindungsflansch zwischen Stellantriebsgehäuse und Stellventilgehäuse, an einem Flansch zwischen dem Stellventilgehäuse und der Anlagenrohrleitung oder an der Ventilstange selbst. Die Anbringung des Schallaufnehmers an der Ventilstange hat den Vorteil, dass gerade hochfrequente Schallsignalanteile benachbarter Komponenten in der prozesstechnischen Anlage, welche beispielsweise über die Rohrleitung übertragen werden, gedämpft und abgeschwächt sind. Der den Betrieb charakterisierende Körperschall des zu überwachenden Stellventils kann unmittelbar über den Schließkörper und damit über die Ventilstange abgetastet werden. Es wird des Weiteren vorgeschlagen, für den Schallaufnehmer ein piezoelektrisches Wandlerelement einzusetzen, das im Bereich niederfrequenter Betriebsgeräusche unempfindlich, im höherfrequenten Bereich empfindlich ausgestaltet ist. Dabei wird sich auf die Erkenntnis gestützt, dass verschiedene Betriebszustände, insbesondere Betriebsfehlertypen, von bestimmten Frequenzbändern charakteristische Abweichungen zeigen. Das bekannte Diagnosesystem leidet allerdings unter einer aufwendigen Signalauswertung und einer geringen Reproduzierbarkeit.

Des Weiteren ist aus WO 02/077733 A1 eine Diagnoseeinrichtung für ein Feldgerät im industriellen Umfeld einer verfahrenstechnischen Anlage bekannt. Das Feldgerät ist über einen Datenpfad mit einer zentralen Steuerung verbunden und umfasst eine akustische Datenerfassungseinrichtung in Form eines Mikrofons. Bei Abweichung der Geräuschinformation von gespeicherten Daten einer zentralen Steuerung kann die Funktionsweise des Feldgeräts verifiziert werden. Diese Diagnoseeinrichtung besitzt den Nachteil einer geringen Messgenauigkeit.

DE 10 2006 055 747 A1 offenbart ein Diagnosesystem für ein Stellventil, das durch einen pneumatischen Stellantrieb betätigt wird, der von einem Stellungsregler gesteuert wird. Zur Überprüfung der richtigen Funktionsweise des Stellventils ist es bekannt, dass während des bestimmungsgemäßen Gebrauchs spezifische akustische Signale abgegeben werden. Diese sollen in dem pneumatischen Stellantrieb aufgenommen werden, woraus Rückschlüsse auf den Zustand des Stellventils geschlossen werden sollen. Dabei wird sich an der Erkenntnis bedient, dass akustische Signale auf die Membran des pneumatischen Stellantriebs übertragen werden, welche akustischen Signale durch die große Membran verstärkt werden und an das Luftdruckmittel weitergegeben werden. Als akustischer Sensor wird ein Drucksensor verwendet. Das Diagnosesystem leidet ebenfalls unter einer geringen Zuverlässigkeit und einem hohen Diagnoseaufwand, um die wesentlichen Signale von den unwesentlichen Signalen hinsichtlich der Beurteilung der Funktionsfähigkeit des Stellventils auszufiltern.

Aus DE 10 2006 059 938 B3 ist ein Verfahren zur Diagnose eines pneumatisch betriebenen Stellventils bekannt. Ein Stellungsregler steuert die pneumatische Hilfsenergie, welche dem Stellantrieb zugeführt wird. Der Stellungsregler hat eine Düsen-Prallplatten-Anordnung, welche zusätzlich als Sensor genutzt wird. Ein derartiges Diagnosesystem ist temperaturabhängig und somit im Einsatz für die prozesstechnische Anlage eher ungeeignet.

EP 2 191 182 B1 lehrt einen Körperschallaufnehmer, der in einer Befestigungsschraube integriert ist, die den Stellungsregler an dem Feldgerät anbringt. Zur Identifikation einer Leckage am Stellventil wird der Druck des Prozessfluids an der Zulaufseite gemessen und mit einem Referenzdruck verglichen. Das Diagnosesystem löst einen Alarm aus, wenn der gemessene Körperschallpegel einen Referenzwert überschreitet und gleichzeitig ein Druckmesswert kleiner als der Referenzdruckwert ist. Präzise Aussagen über eine Leckage oder Kavitation ist mit dem bekannten System nicht erreichbar.

EP3039329 B1 offenbart eine prozesstechnische Anlage mit einem Stellventil nach dem Stand der Technik. XP055481546 offenbart die Verwendung eines optischen Mikrofons zur Leckageerkennung. WO2011/083760 A1 offenbart ein membranloses optisches Mikrofon.

Es ist Aufgabe der Erfindung, die Nachteile des Stands der Technik zu überwinden, insbesondere ein Diagnosesystem zum Kontrollieren der Funktionsfähigkeit eines Stellgeräts einer prozesstechnischen Anlage bereitzustellen, mit dem eine Früherkennung von Stellgeräteschäden, wie Leckage und Kavitation, mit einer hohen Zuverlässigkeit und möglichst präzise erreicht werden kann.

Diese Aufgabe wird durch ein Stellventil nach Anspruch 1 und eine prozesstechnische Anlage mit einem Stellventil nach Anspruch 10 gelöst. Die Erfindung umfasst ein Diagnosesystem zum Kontrollieren der Funktionsfähigkeit des Stellventils, vorgesehen, das dazu dient, eine Prozessmediumströmung einer prozesstechnischen Anlage, wie einer chemischen Anlage, einer Lebensmittel verarbeitenden Anlage, eines Kraftwerks oder dergleichen, zu beeinflussen. Insbesondere soll das Stellgerät dazu ausgelegt sein, eine explosionsgefährdete Prozessmediumströmung einzustellen. Das Diagnosesystem sowie auch das Stellgerät sind dazu geeignet, in dem EX-Bereich eingesetzt zu werden. Bei dem das erfindungsgemäße Diagnosesystem umfassende Stellgerät, das den Zündschutz berücksichtigt, ist vorzugsweise als Hilfsantriebsenergie Pneumatik verwendet, um hohe elektrische Spannungen und Stromflüsse zu vermeiden. Lediglich für Diagnose und Sensorik ist eine kleine elektrische Leistung insbesondere von wenigen Watt einsetzbar.

Das Diagnosesystem des Stellventils hat ein optisches Mikrofon, das insbesondere auf ein Strukturelement, wie ein Innenorgan oder die Außenseite, des Stellgeräts ausgerichtet ist und ein akustisches, stellgerätspezifisches Betriebssignal oder Betriebsgeräusch, wie Leckageschall, Kavitationsschall, mittels elektromagnetischer Strahlung, wie Licht, misst, die durch das akustische, stellgerätspezifische Betriebssignal beeinflusst ist. Dabei nutzt das optische Mikrofon die sich aufgrund von Schall, nämlich Schalldruckwellen, ergebende Änderungen der elektromagnetischen Strahlung an einer mikrofonspezifischen Ausrichtstelle. Das optische Mikrofon kann ein von dem akustischen Betriebssignal abhängiges, elektrisches Messsignal erzeugen. Des Weiteren hat das erfmdungsgemäße Diagnosesystem eine elektronische Diagnoseeinrichtung, welche das elektrische Messsignal des optischen Mikrofons empfängt und insbesondere anschließend speichert, verarbeitet und/oder weiterleitet, insbesondere an eine stellgerätspezifische Elektronikeinheit, wie einen Mikrorechner, beispielsweise eines Stellungsreglers, oder an eine mit dem Stellgerät verbundene Leitwarte der prozesstechnischen Anlage.

Das Diagnosesystem des Stellventils bedient sich an einem optischen Mikrofon, das entweder vorhandene elektromagnetische Strahlung, insbesondere deren sichtbaren Teil (380 nm bis 780 nm, Umgebungslicht) nutzt oder eine künstliche, mikrofoneigene Lichtquelle aufweist, welche beispielsweise als Laserdiode realisiert sein kann. Die Lichtquelle kooperiert vorzugsweise mit einem Messkopf, der beispielsweise als interferometrischer Spiegel ausgebildet sein kann. Der Messkopf kann relativ zur Lichtquelle beweglich gelagert sein, wobei auch die Lichtquelle beweglich gelagert sein kann. Vorzugsweise sind beide Lichtquellen ortsfest zueinander angeordnet. Bei einer bevorzugten Ausführung der Erfindung sind der Messkopf und die Lichtquelle des optischen Mikrofons über einen insbesondere verformbaren Lichtwellenleiter vorzugsweise flexibel miteinander gekoppelt, so dass eine Relativbewegung zwischen Messkopf und Lichtquelle zugelassen wird, ohne dass die optische Lichtwellenführung zwischen Messkopf und Lichtquelle beeinträchtigt ist. Auf diese Weise kann bei Einsatz einer empfindlichen Laserdiode, diese in einem geschützten Bereich, beispielsweise in einem Gehäuse, getrennt von dem Messkopf und/oder der Ausrichtstelle angeordnet sein, um nicht rauen Umgebungsbedingungen am oder im Stellgerät ausgesetzt zu sein.

Der durch das akustische, stellgerätspezifische Betriebssignal erzeugte Schalldruck, insbesondere dessen Änderung, lässt sich über die Änderung des Brechungsindex in der Luft optisch erfassen, welche durch Schallwellen hervorgerufen wird. Die akustischen, stellgerätspezifischen Betriebssignale sind typische Betriebsgeräusche, die von dem Stellgerät an bestimmten Stellen des Stellgeräts mit höherer Intensität abgegeben werden. Diese Stellen höherer Geräuschintensität sind häufig für eine Erfassung schwer zugänglich, allerdings mit dem erfindungsgemäßen optischen Mikrofon abtastbar. Beispielsweise kann der Leckageschall oder Kavitationsschall insbesondere in der Nähe des Schließglieds des Stellventils mit hoher Intensität aufgenommen werden, was eine Anordnung des Aufnehmers in dem Prozessmedium erfordert, was eben durch ein optisches Mikrofon erreicht werden kann. Für die Diagnose können Referenzwerte, wie Erfahrungswerte, für Betriebsgeräusche gespeichert sein oder im Rahmen eines Initialisierungsprozesses für das jeweilige Stellgerät spezifisch aufgenommen werden, um für jedes Stellgerät individuell einen spezifischen Geräuschfingerabdruck als Vergleichsreferenz vorzuweisen. Ein Leckageschall kann beispielsweise dadurch stellgerätspezifisch aufgenommen sein, dass das intakte Stellgerät entsprechend einem üblichen Leckageverschleißdurchlass geöffnet wird, wodurch sich typische Durchflussgeräusche einstellen, die stellgerätespezifisch gespeichert werden.

Eine möglichst präzise Umwandlung des akustischen Betriebssignals oder Betriebsgeräusches in elektrische Messsignale wird durch das optische Mikrofon erreicht, von dem entweder die Veränderlichkeit des Umgebungslichts wegen der Schalldruckschwankungen erfasst wird oder die Lichtgeschwindigkeitsänderung eines Lichtstrahls einer mikrofoneigenen Lichtquelle, wie eines Laserstrahls, der das Schallfeld durchquert, erfasst wird. Die Änderung der Lichtgeschwindigkeit ist proportional zum Schalldruck. Beispielsweise kann eine Interferenzanordnung herangezogen werden, indem Änderungen der Lichtgeschwindigkeit in einem schallfreien Luftfeld mit denen des mit dem Betriebsgeräusch durchsetzten Schallfeld verglichen werden. Dazu kann das optische Mikrofon beispielsweise zwei Laserstrahlquellen aufweisen, die den gleich langen Weg zurücklegen, wobei das eine Strahldurchquerungsfeld von dem akustischen, stellgerätspezifischen Betriebssignal unbeeinflusst ist, während das Schallfeld von diesem durchsetzt wird. Zum Erfassen der interferierenden Laserstrahlen ist ein Detektor vorgesehen, der die gemessene Interferenz als elektrisches Messsignal ausgibt.

Bei einer bevorzugten Ausführung der Erfindung hat das optische Mikrofon einen ersten Interferometer und einen zweiten Interferometer, die jeweils Licht von ein und derselben Lichtquelle empfangen können. Durch die Verwendung mehrerer Interferometer wird eine sehr aussagekräftige räumliche Auflösung des Schallfelds erreicht. Jedes Interferometer kann für sich über einen Strahlteiler verfügen, der den Licht- oder Laserstrahl auf zwei unterschiedliche, aber gleich lange Wege schickt. Der eine Teilstrahl ist dem Schallfeld ausgesetzt, der andere ist akustisch isoliert. Beide Teilstrahlen werden, nachdem sie in der Regel mehrfach an Spiegeln reflektiert wurden, wieder zusammengeführt und interferieren miteinander. Das jeweilige Interferometer kann ein Fabry-Perot-Interferometer sein.

Mit dem Diagnosesystem des Stellventils kann auf dem Gebiet des verfahrenstechnischen Einsatzes von Stellgeräten, insbesondere Stellventilen, prozesstechnischer Anlagen eine erhöhte Zuverlässigkeit bei der Früherkennung von Verschleißschäden, insbesondere Leckage und Kavitation, erreicht werden. Es zeigte sich, dass die kontaktfreie Messung akustischer Betriebsgeräusche, die spezifisch für bestimmte Betriebszustände des Stellgeräts sind, ohne strukturelle Kontaktaufnahme präzise erfasst werden können. Überraschenderweise zeigte sich auch, dass gerade der Einsatz eines optischen Mikrofons, das Schallwellen über die Änderung des Brechungsindex eines mit Schallwellen durchsetzten Gasmediums, wie Luft, erfasst, besonders präzise Messungen für höhere Frequenzen erreicht, welche vor allem bei der Bestimmung von Kavitation und genauen Leckagemengen wichtig sind. Besonders vorteilhaft ist das erfindungsgemäße Diagnosesystem aufgrund der Möglichkeit, es robust und kompakt aufzubauen. Es erlaubt, Messungen an Stellen vorzunehmen, die bisher gemäß Stand der Technik nicht möglich waren. Insbesondere können Schallmessungen direkt im Prozessmedium selbst, beispielsweise in der Nähe des Schließkörpers des Stellventils, vorgenommen werden. Auch Messungen an pneumatisch beaufschlagten Antriebsmembranen sind möglich, insbesondere um die Betriebsfunktionsfähigkeit eines pneumatischen Stellantriebs mit Membranstruktur zu prüfen. Im Gegensatz zu den meisten bekannten Diagnosesystemen, ist der eigene Einfluss der Anordnung des Diagnosesystems selbst auf das zu erfassende Schallfeld gering. Das Schallfeld wird von dem vorherrschenden oder erzeugten mikrofoneigenen Licht kaum beeinflusst. Des Weiteren kann mit dem erfindungsgemäßen Diagnosesystem eine elektromagnetische Störung des Schallfelds ausgeschlossen sein.

Es sei klar, dass das optische Messverfahren im Schallfeld von Luft oder anderen Gasen/Fluiden/Flüssigkeit möglich ist. Gasförmige Medien sind im Allgemeinen geeignet, bei denen sich die Lichtgeschwindigkeit aufgrund von Schalldruckwellen im Medium ändert. Für die Erzeugung des von dem akustischen, stellgerätspezifischen Betriebssignal abhängigen, elektrischen Messsignals kann das optische Mikrofon einen entsprechenden Wandler umfassen, der ein oder mehrere Interferometer insbesondere mit einem ortsfesten, insbesondere beweglichen Spiegel umfasst. Beispielsweise können ein oder mehrere Strahlungsdetektoren vorgesehen sein, die dazu ausgelegt sind, die durch die Schallwellen beeinflusste elektromagnetische Strahlung zu erfassen und die erfasste, beeinflusste elektromagnetische Strahlung in das magnetische Messsignal umzuwandeln.

Die elektronische Diagnoseeinrichtung des Diagnosesystem des Stellventils empfängt das elektrische Messsignal. Vorzugsweise ist die elektronische Diagnoseeinrichtung als Speicher, wie ROM oder RAM, und/oder Mikrorechner ausgeführt. Die Diagnoseeinrichtung kann das elektrische Messsignal speichern, wobei der Speicher insbesondere nicht dazu ausgelegt sein muss, ständig mit einer elektrischen Energie versorgt zu sein, um das gespeicherte Signal zu erhalten. Die Diagnoseeinrichtung kann auch dazu ausgelegt sein, das elektrische Messsignal zu bewerten, insbesondere im Hinblick auf einen Referenzwert. Wird der Referenzwert überschritten, kann die elektronische Diagnoseeinheit dazu ausgelegt sein, ein Alarmsignal, akustisch oder optisch, auszugeben. Die Diagnoseeinrichtung kann anhand der elektrischen Messsignale Einfluss auf eine Regelung eines Stellungsreglers des Stellgeräts nehmen. Insbesondere soll die Diagnoseeinrichtung dazu ausgelegt sein, das elektrische Messsignal an eine weitere elektronische Komponente, wie den Stellungsregler, eine Leitwarte des Stellgeräts, eine Sendeeinrichtung, eine Anzeigeeinrichtung des Stellgeräts, etc., weiterzuleiten.

Bei der Erfindung ist das optische Mikrofon membranlos ausgeführt und bedarf daher keiner beweglichen Bauteile, wodurch eine äußerst präzise Kennung des akustischen, stellgerätspezifischen Betriebssignals erreicht wird. Das optische Mikrofon ist dazu ausgeführt, Schalldruck optisch über die Erfassung der Änderung des Brechungsindex der Luft im Verlauf der Schallwellen des akustischen, stellgerätspezifischen Betriebssignals zu erfassen.

Bei der Erfindung ist das optische Mikrofon im Inneren eines Gehäuses des Stellgeräts, wie des Ventilgehäuses des Stellventils, angeordnet, wobei das Innere des Gehäuses von Prozessmedium durchströmt wird. Alternativ oder zusätzlich kann ein insbesondere weiteres optisches Mikrofon in einer prozessmediumführenden Rohrleitung der prozesstechnischen Anlage insbesondere benachbart dem Stellgerät angeordnet sein, wobei insbesondere das optische Mikrofon in das Innere des Gehäuses des Stellgeräts ausgerichtet ist.

Bei der Erfindung ist das optische Mikrofon durch eine Anordnung von wenigstens zwei, vorzugsweise genau zwei oder drei, optischen Mikrofoneinheiten gebildet, wobei die Mikrofoneinheiten entsprechend der oben dargestellten Struktur ausgeführt sein können. Jede Mikrofoneinheit hat die Fähigkeit, schallwellenspezifische elektrische Messsignale zu erzeugen. Die Anordnung ist derart ausgeführt, insbesondere liegen die wenigstens zwei Mikrofoneinheiten derart zueinander, dass mittels der jeweils durch die Mikrofoneinheit erzeugten Messsignale ein Schallfeld des akustischen, stellgerätspezifischen Betriebssignals mehrdimensional aufgelöst werden kann. Die Anordnung von wenigstens zwei Mikrofoneinheiten ist mit der Diagnoseeinrichtung signalübertragungsgemäß gekoppelt, welche die wenigstens zwei Messsignale verarbeiten, speichern und/oder weiterleiten kann. Die Diagnoseeinrichtung ist dazu ausgelegt, eine dreidimensionale Auflösung des Schallfelds anhand der übermittelten Messsignale dreier optischer Mikrofone durchzuführen. Dabei kann die Diagnoseeinrichtung derart die Auswertung der Messsignale der Anordnung vornehmen, dass sie die Schallquelle insbesondere der Leckage oder der Kavitation lokalisiert und/oder die Schallgeschwindigkeit bestimmt.

Bei einer bevorzugten Ausführung der Erfindung umfasst das Diagnosesystem zusätzlich einen piezoelektrischen Körperschallsensor oder einen Schallsensor mit einer die Schallwellen aufnehmenden Membran, wobei die Messdaten des Körperschallsensors oder des Schallsensors der Diagnoseeinrichtung übergeben ist, um insbesondere die Verarbeitung des von dem optischen Mikrofon erzeugten Messsignals zu bewerten. Auf diese Weise kann die Präzision der Erfassung von akustischen Betriebssignalen des Stellgeräts erhöht werden.

Bei einer bevorzugten Ausführung ist vorgesehen, dass das optische Mikrofon eine Lichtquelle, wie eine Laserdiode, sowie einen Messkopf umfasst, welche über einen insbesondere flexiblen Lichtwellenleiter, wie ein Glasfaserkabel, derart miteinander gekoppelt sind, dass die Lichtquelle und der Messkopf zueinander beweglich gehalten werden können, wobei insbesondere der Messkopf zumindest einen Lichtteiler aufweist, um einen ersten Lichtstrahl, der den Schallwellen des akustischen Betriebssignals ausgesetzt ist, und einen zweiten Lichtstrahl zu erzeugen, der einem von den Schallwellen geschützten Weg zumindest teilweise folgt.

Weitere Eigenschaften, Vorteile und Merkmale der Erfindung werden durch die folgende Beschreibung einer bevorzugten Ausführung anhand der beiliegenden Figuren beschrieben, in denen zeigen:
- Fig. 1: eine Prinzipskizze eines erfindungsgemäßen Stellgeräts mit einem erfindungsgemäßen Diagnosesystem; und
- Fig. 2: eine Funktionsprinzipskizze eines optischen Mikrofons des erfindungsgemäßen Diagnosesystems.

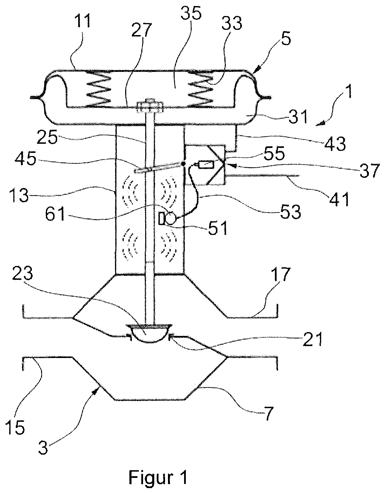

In Fig. 1 ist das erfindungsgemäße Stellgerät mit einem erfindungsgemäßen Diagnosesystem dargestellt. Das Stellgerät ist in der speziellen Ausführung nach Fig. 1 als ein vollständiges Feldgerät mit der Bezugsziffer 1 erweitert, das ein Stellventil 3 und einem pneumatischen Stellantrieb 5 umfasst, wobei das Stellventilgehäuse 7 mit dem Antriebsgehäuse 11 über ein Joch 13 ortsfest getragen ist.

Das Stellventil 3 ist in einem Rohrsystem einer prozesstechnischen Anlage integriert, wobei der Rohransatz für die Strömungseingangsleitung mit der Bezugsziffer 15 versehen ist und für eine Strömungsausgangsleitung mit der Bezugsziffer 17. Im Inneren des Stellventilgehäuses 7 ist ein Ventilsitz 21 ortsfest an der Innenseite des Stellventilgehäuses 7 befestigt. Der Ventilsitz 21 kooperiert mit einem Ventilglied 23 des Stellventils 7, das über eine Stellstange 25 von dem pneumatischen Stellantrieb 5 betätigt wird. Die Stellstange 13 erstreckt sich durch eine Öffnung im Oberteil des Stellventilgehäuses 7 längs des Joches 13 in eine Durchführung im Stellantriebsgehäuse 11 und ist mit einer die beiden Arbeitskammern 31, 35 des pneumatischen Stellantriebs 5 trennenden Membran 27 fest verbunden.

Der Stellantrieb 5 hat eine Arbeitskammer 31 und eine mit Druckfedern 33 belegte Rückstellkammer 35. Die pneumatische Arbeitskammer 31 ist pneumatisch mit einem Stellungsregler 37 verbunden, der an eine Druckluftquelle 41 von etwa 6 bar angeschlossen ist.

Der Stellungsregler 37 hat einen pneumatischen Ausgang, der über eine Ausgangsleitung 43 mit der pneumatischen Arbeitskammer 31 gekoppelt ist. Der Stellungsregler 37 umfasst einen Stellungssensor, der die Position des Ventilglieds 23 über einen Abtastarm 45 erfasst, der drehbeweglich an der Stellstange 25 befestigt ist.

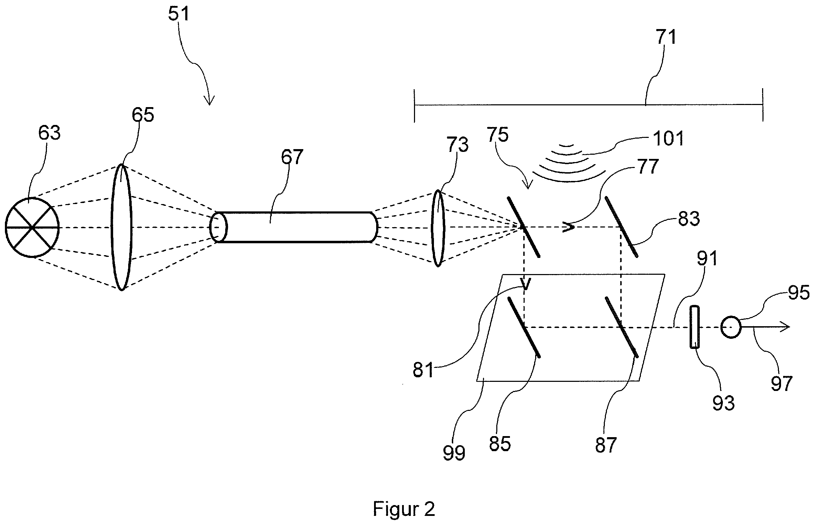

Das erfindungsgemäße Diagnosesystem des Feldgeräts 1 umfasst ein optisches Mikrofon 51, das über ein Datenkabel 53 mit einer Diagnoseeinrichtung 55 gekoppelt ist, die im Inneren des Gehäuses des Stellungsreglers 37 angeordnet ist. Das optische Mikrofon 51 ist innerhalb des Jochs 13 und außerhalb des Stellventilgehäuses 7 und des Stellantriebsgehäuses 11 angeordnet und liegt benachbart dem Stellungsregler 37. Es sei klar, dass das optische Mikrofon 51 auch innerhalb des Stellventilgehäuses 7 und/oder des Stellantriebsgehäuses 11 angeordnet sein kann, wobei das optische Mikrofon 51 entweder dem Prozessmedium, das durch die Strömungsleitung der prozesstechnischen Anlage fließt, oder innerhalb der pneumatischen Arbeitskammer dem erhöhten Luftdruck ausgesetzt sein kann. Das optische Mikrofon 51 hat eine Laserdiode, deren Licht einem Messkopf, insbesondere interferometrischem Spiegel, zugeordnet ist. Diese Elemente sind in Fig. 2 näher dargestellt. Das optische Mikrofon 51 kann zusätzlich ein piezoelektrisches Antriebselement 61 umfassen, das die Laserdiode und/oder den Messkopf relativ zur Ausrichtstelle/Schallquelle (hier die Ventilstange) verlagern kann, um insbesondere ein mehrdimensionales Schallfeld zu erzeugen. Das Antriebselement 61 kann über die Leitung 53 mit elektrischer Energie versorgt werden. Die Leitung 53 kann auch als Lichtwellenleiter 67 des optischen Mikrofons 51 ausgebildet sein, wobei eine Lichtquelle 63 im Stellungsreglergehäuse 37 untergebracht ist und über den Lichtwellenleiter 67 mit einem Messkopf 71 des optischen Mikrofons 51 optisch gekoppelt ist.

Die Diagnoseeinrichtung 55 kann ein Mikrorechner aufweisen, der die Messsignale des optischen Mikrofons 51 empfängt und bearbeitet, insbesondere bewertet. Der Mikrorechner kann mit einer Sendevorrichtung versehen sein, der die Diagnoseergebnisse bzw. die Auswertergebnisse einer Leitwarte oder einem Empfänger weiterleitet, welcher eine Diagnose vervollständigt oder die Diagnoseergebnisse anzeigen kann. Der Mikrorechner in dem Stellungsregler 37 kann mit einem Speicher gekoppelt sein, in dem sowohl die Messsignale des optischen Mikrofons 51 als auch gespeicherte Vergleichswerte, insbesondere Erfahrungswerte, abgelegt sind, um die gewünschte Diagnose zu stellen.

In Fig. 2 ist der prinzipielle Aufbau des optischen Mikrofons 51 dargestellt, der für das erfindungsgemäße Diagnosesystem des Feldgeräts 1 eingesetzt werden soll. Als Hauptbestandteile umfasst das optische Mikrofon 51 eine Lichtquelle 63, die als Laserdiode ausgeführt sein kann, und einen Messkopf 71, der im Stellantriebsgehäuse 11, Stellventilgehäuse 7 oder anderweitig in vom Prozessfluid durchströmte Bereiche angeordnet sein kann. Lichtstrahlen der Lichtquelle 63 werden an der Eingangslinse 65, die für das optische Mikrofon 51 nicht notwendig ist, gebündelt, um in einen Lichtwellenleiter 67 konzentriert zu werden, der beispielsweise als flexible Glasfaserleitung ausgeführt sein kann. Mit dem Einsatz des Lichtwellenleiters 67 kann eine größere Distanz zwischen der geschützt unterzubringenden Lichtquelle 63 und dem nahe dem Schallfeld zu positionierenden Messkopf überbrückt werden, der im Allgemeinen mit der Bezugsziffer 71 versehen ist. Der Messkopf 71 umfasst eine zweite Linse 73, welche die von dem Lichtwellenleiter 67 austretenden Lichtstrahlen bündelt und einem Strahlenteiler 75 im Brennpunkt zuführt, der die gebündelten Lichtstrahlen in einen ersten Teilstrahl 77 und in einen zweiten Teilstrahl 81 unterteilt. Der erste Teilstrahl 77 ist einem ersten Spiegel 83 zugeordnet. Der zweite Teilstrahl 81 ist einem zweiten Spiegel 85 zugeordnet, wobei beide Spiegel 83, 85 den jeweiligen Teilstrahl 77, 81 auf einen weiteren Strahlenteiler 87 umlenken. Der weitere Strahlenteiler 87 vereinigt die Teilstrahlen 77, 81, um eine Interferenzanordnung 91 hervorzurufen, die über einen Schirm 93 einer Photodiode 95 zugeordnet wird, die entsprechend der erfassten Interferenzstärke ein elektrisches Messsignal 97 abgibt.

Der zweite Strahlenteiler 87 zum Ermöglichen der Interferenzbetrachtung sowie der zweite Spiegel 85 sind in einem schallgeschützten Umfeld, wie einem Gehäuse 99, untergebracht, während der erste Teilstrahl 77 Schallwellen 101 des akustischen Betriebssignals ausgesetzt ist. Anhand der Interferenz 91 der Teilstrahlen 77, 81 kann festgestellt werden, ob das akustische Betriebssignal 101 existiert und wie es charakterisiert ist, wodurch präzise Rückschlüsse auf Funktionsfähigkeit/Schaden des Stellventils 3 der prozesstechnischen Anlage getroffen werden können.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Feldgerät
- 3: Stellventil
- 5: Stellantrieb
- 7: Stellventilgehäuse
- 11: Stellantriebsgehäuse
- 13: Joch
- 15: Strömungseingangsleitung
- 17: Strömungsausgangsleitung
- 21: Ventilsitz
- 23: Ventilglied
- 25: Stellstange
- 27: Membran
- 31: Arbeitskammer
- 33: Druckfeder
- 35: Rückstellkammer
- 37: Stellungsregler
- 41: Druckluftquelle
- 43: Ausgangsleitung
- 45: Abtastarm
- 51: optisches Mikrofon
- 53: Leitung/Kabel/Lichtwellenleiter
- 55: Diagnoseeinrichtung
- 61: Antriebselement
- 63: Lichtquelle
- 65: Eingangslinse
- 67: Lichtwellenleiter
- 71: Messkopf
- 73: Linse
- 75: erster Strahlenteiler
- 77: erster Teilstrahl
- 81: zweiter Teilstrahl
- 83: erster Spiegel
- 85: zweiter Spiegel
- 87: zweiter Strahlenteiler
- 91: Interferenz
- 93: Schirm
- 95: Photodiode
- 97: elektrisches Messsignal
- 99: Gehäuse
- 101: Schallwellen/Schallfeld

## Patentansprüche

1. Stellventil zum Beeinflussen einer Prozessmediumströmung einer prozesstechnischen Anlage, umfassend ein Diagnosesystem zum Kontrollieren der Funktionsfähigkeit des Stellventils, wobei das Diagnosesystem umfasst:
ein optisches, dem Stellventil zugeordnetes Mikrofon (51), das ein akustisches, stellventilspezifisches Betriebssignal mittels durch das akustische, stellventilspezifische Betriebssignal beeinflusster, elektromagnetischer Strahlung misst, wobei das optische Mikrofon (51) ein von dem akustischen, stellventilspezifischen Betriebssignal abhängiges, elektrisches Messsignal erzeugt; und
eine elektronische Diagnoseeinrichtung (55), welche das elektrische Messsignal empfängt und speichert, verarbeitet und/oder weiterleitet, wobei das optische Mikrofon (51) membranlos ausgeführt ist,
wobei das optische Mikrofon (51) im Inneren eines Gehäuses des Stellventils, das von dem Prozessmedium durchströmt wird, angeordnet ist,
wobei das optische Mikrofon (51) durch eine Anordnung von wenigstens zwei optischen Mikrofoneinheiten gebildet ist, um mittels der jeweils durch die Mikrofoneinheiten erzeugten Messsignale ein Schallfeld des akustischen stellventilspezifischen Betriebssignals dreidimensional aufzulösen.

2. Stellventil nach Anspruch 1, **dadurch gekennzeichnet, dass** das optische Mikrofon (51) dazu ausgeführt ist, Schalldruck optisch über die Erfassung der Änderung des Brechungsindex von Luft im Verlauf der Schallwellen des akustischen, stellgerätspezifischen Betriebssignals zu messen.

3. Stellventil nach Anspruch 1 oder 2, **dadurch gekennzeichnet, dass** das optische Mikrofon (51) in einer pneumatischen Leitung eines pneumatischen Stellantriebssystems des Stellventils angeordnet ist, und/oder dass das optische Mikrofon (51) in einer pneumatischen Arbeitskammer (31) eines pneumatischen Stellantriebs (5) des Stellgeräts angeordnet ist.

4. Stellventil nach einem der vorstehenden Ansprüche, **dadurch gekennzeichnet, dass** die Anordnung von wenigstens zwei Mikrofoneinheiten mit der Diagnoseeinrichtung (55) signalübertragungsgemäß gekoppelt ist, welche die dreidimensionale Auflösung des Schallfeldes derart durchführt, dass sie eine Schallquelle lokalisiert und/oder die Schallgeschwindigkeit bestimmt.

5. Stellventil nach einem der vorstehenden Ansprüche, **gekennzeichnet, durch** eine Verstellvorrichtung zum Bewegen wenigstens eines Teils des optischen Mikrofons (51) gegenüber einem ortsdefinierten Schallfeld am Stellgerät, wobei die Verstellvorrichtung einen Antrieb (61) umfasst, der mit einem piezoelektrischen Material versehen ist und/oder mit elektrischer Energie versorgt ist, welche der Prozessmediumströmung oder einer Hilfsenergiequelle entnommen ist.

6. Stellventil nach einem der vorstehenden Ansprüche, **dadurch gekennzeichnet, dass** es zusätzlich einen piezoelektrischen Körperschallsensor oder einen Schallsensor mit Membran umfasst, dessen Messdaten der Diagnoseeinrichtung (55) übergeben sind, um die Verarbeitung des von dem optischen Mikrofon (51) erzeugten Messsignals zu bewerten.

7. Stellventil nach einem der vorstehenden Ansprüche, **dadurch gekennzeichnet, dass** das optische Mikrofon (51) eine Lichtquelle (63) sowie einen Messkopf (71) umfasst, welche über einen insbesondere flexiblen Lichtwellenleiter derart gekoppelt sind, dass die Lichtquelle (63) und der Messkopf (71) zueinander bewegt werden können, wobei der Messkopf (71) zumindest einen Strahlenteiler (75) aufweist, um einen ersten Lichtstrahl (77), der den Schallwellen des akustischen Betriebssignals ausgesetzt ist, und einen zweiten Lichtstrahl (81) zu erzeugen, der einem von den Schallwellen geschützten Weg zumindest teilweise folgt.

8. Verfahren zum Kontrollieren der Funktionsfähigkeit eines nach einem der vorstehenden Ansprüche ausgebildeten Stellventils, das eine Prozessmediumströmung einer prozesstechnischen Anlage beeinflusst;
wobei ein akustisches, stellventilspezifisches Betriebssignal im Inneren eines Gehäuses des Stellventils, das von dem Prozessmedium durchströmt wird, und/oder in einer Prozessmedium führenden Rohrleitung (15, 17) der prozesstechnischen Anlage mittels durch das akustische, stellgerätspezifische Betriebssignal beeinflusster, elektromagnetischer Strahlung membranlos gemessen wird; und
ein von dem akustischen, stellventilspezifischen Betriebssignal abhängiges, elektrisches Meßsignal membranlos erzeugt wird.

9. Verfahren nach Anspruch 8, **dadurch gekennzeichnet, dass** gemäß der Funktionsweise des nach einem der vorstehenden Ansprüche ausgebildeten Stellventils verfahren wird.

10. Prozesstechnische Anlage umfassend:
- ein Rohrsystem mit einer Prozessmedium führenden Rohrleitung (15,17);
- ein in das Rohrsystem integriertes Stellventil zum Beeinflussen einer Prozessmediumströmung der prozesstechnischen Anlage, wobei das Stellventil einen Rohransatz (15) für eine Strömungseingangsleitung und einen Rohransatz (17) für eine Strömungsausgangsleitung aufweist, wobei das Stellventil ferner ein Diagnosesystem zum Kontrollieren der Funktionsfähigkeit des Stellventils aufweist, wobei das Diagnosesystem umfasst:
o ein optisches, dem Stellventil zugeordnetes Mikrofon (51), das ein akustisches, stellventilspezifisches Betriebssignal mittels durch das akustische, stellventilspezifische Betriebssignal beeinflusster, elektromagnetischer Strahlung misst, wobei das optische Mikrofon (51) ein von dem akustischen, stellventilspezifischen Betriebssignal abhängiges, elektrisches Messsignal erzeugt; und
o eine elektronische Diagnoseeinrichtung (55), welche das elektrische Messsignal empfängt und speichert, verarbeitet und/oder weiterleitet, wobei das optische Mikrofon (51) membranlos ausgeführt ist,
o wobei das optische Mikrofon (51) im Inneren eines Gehäuses des Stellventils, das von dem Prozessmedium durchströmt wird, und/oder in der Prozessmedium führenden Rohrleitung (15, 17) der prozesstechnischen Anlage angeordnet ist,
o wobei das optische Mikrofon (51) durch eine Anordnung von wenigstens zwei optischen Mikrofoneinheiten gebildet ist, um mittels der jeweils durch die Mikrofoneinheiten erzeugten Messsignale ein Schallfeld des akustischen stellventilspezifischen Betriebssignals dreidimensional aufzulösen.

11. Prozesstechnische Anlage nach Anspruch 10, wobei das Stellventil gemäß einem der Ansprüche 2 bis 7 ausgebildet ist.

## Claims

1. A control valve for affecting a process medium stream of a process plant comprising a diagnostic system for function-monitoring an actuator, wherein the diagnostic system comprises:
an optical microphone (51) being allocated to the actuator, which microphone measures an acoustic, actuator-specific operating signal by electromagnetic radiation that is affected by the acoustic, actuator-specific operating signal, wherein the optical microphone (51) generates an electrical measuring signal that depends on the acoustic, actuator-specific operating signal; and
an electric diagnostic device (55) that receives and stores, processes and/or transmits the electrical measuring signal, wherein the optical microphone (51) is designed witout diaphragm,
wherein the optical microphone (51) is formed by an arrangement of at least two optical microphone units to conduct a three-dimensional resolution of a sound field of the acoustic, actuator-specific operating signal by the measuring signals being respectively generated by the microphone units.

2. A control valve according to claim 1, **characterized in that** the optical microphone (51) is designed to optically measure sound pressure by monitoring the change of the refraction index of air in the course of the sound waves of the acoustic, actuator-specific operating signal.

3. A control valve according to claim 1 or 2, **characterized in that** the optical microphone (51) is arranged in a pneumatic conduit of a pneumatic actuating drive system of the actuator, and/or **in that** the optical microphone (51) is arranged in a pneumatic working chamber (31) of a pneumatic actuating drive (5) of the actuator.

4. A control valve according to one of the preceding claims, **characterized in that** the arrangement of at least two optical microphone units is coupled with the diagnostic device (55) in a signal transmission manner, wherein said arrangement performs the three dimensional resolution of the sound field in such a way that the arrangement localizes a sound source and/or determines the sound velocity.

5. A control valve according to one of the proceeding claims, **characterized by** an adjusting device for moving at least one part of the optical microphone (51) relative to a spatially defined sound field at the actuator, wherein the adjusting device comprises a drive (61) that is furnished with a piezoelectric material and/or that is fed with electric energy being extracted from the process medium stream or from an auxiliary energy source.

6. A control valve according to one of the proceeding claims, **characterized in that** it further comprises a piezoelectric structure-borne sound sensor or a sound sensor with diaphragm, which sensor's measuring data are forwarded to the diagnostic device (55) to evaluate the processing of the measuring signal being generated by the optical microphone (51).

7. A control valve according to one of the preceding claims, **characterized in that** the optical microphone (51) comprises a light source (63) and a measuring head (71) which are coupled by an in particular flexible optical fiber in such a way that the light source (63) and the measuring head (71) can be moved relative to each other, wherein the measuring head (71) comprises at least one beam splitter (75) to create a first light beam (77) that is exposed to the sound waves of the acoustic operating signal, and a second light beam (81) that at least partially follows a path that is protected against the sound waves.

8. A method for function-monitoring a control valve (3) designed according to one of the preceding claims, that affects a process medium stream of a process plant;
wherein an acoustic, actuator-specific operating signal is measured without diaphragm inside the housing of the control valve (3) being flown-through by the process medium and/or inside a conduit (15, 17) leading the process medium of the process plant by electromagnetic radiation that is affected by the acoustic, actuator-specific operating signal.

9. A method according to claim 8, **characterized in that** being carried out according to the functioning of the control valve being designed according to one of the preceding claims.

10. Process plant comprising:
- a conduit system with a conduit (15, 17) leading the process medium,
- a control valve being integrated into the tube system for affecting a process medium stream of the process plant, wherein the control valve having a tube socket (15) for a flow inlet conduit and a tube socket (17) for a flow outlet conduit, wherein the control valve further comprises a diagnostic system for function-monitoring an actuator, wherein the diagnostic system comprises:
∘ an optical microphone (51) being allocated to the actuator, which microphone measures an acoustic, actuator-specific operating signal by electromagnetic radiation that is affected by the acoustic, actuator-specific operating signal, wherein the optical microphone (51) generates an electrical measuring signal that depends on the acoustic, actuator-specific operating signal; and
∘ an electric diagnostic device (55) that receives and stores, processes and/or transmits the electrical measuring signal, wherein the optical microphone (51) is designed without diaphragm,
∘ wherein the optical microphone (51) is arranged inside of a housing of the control valve, which is flown-through by the process medium, and/or is arranged in the conduit (15, 17) of the process plant that leads the process medium,
∘ wherein the optical microphone (51) is formed by an arrangement of at least two optical microphone units to conduct a three-dimensional resolution of a sound field of the acoustic, actuator-specific operating signal by the measuring signals being respectively generated by the microphone units.

11. Process plant according to claim 10, wherein the control valve is designed according to one of the claims 2 to 7.

## Revendications

1. Soupape de régulation permettant d'influencer un flux de fluide de processus d'une installation industrielle, comportant un système de diagnostic destiné à contrôler la capacité fonctionnelle de la soupape de régulation, dans laquelle le système de diagnostic comporte :
un microphone optique (51) attribué à la soupape de régulation, lequel mesure un signal de fonctionnement acoustique spécifique à la soupape de régulation à l'aide d'un rayonnement électromagnétique influencé par le signal de fonctionnement acoustique spécifique à la soupape de régulation, le microphone optique (51) produisant un signal de mesure électrique dépendant du signal de fonctionnement acoustique spécifique à la soupape de régulation ; et
un dispositif de diagnostic électronique (55) destiné à recevoir et enregistrer, traiter et/ou transmettre le signal de mesure électrique, le microphone optique (51) étant conçu sans membrane,
dans laquelle le microphone optique (51) est disposé à l'intérieur d'un boîtier de la soupape de régulation, lequel est traversé par le fluide de processus,
dans laquelle le microphone optique (51) est formé par un agencement d'au moins deux unités de microphone optique, pour la résolution tridimensionnelle d'un champ acoustique du signal de fonctionnement acoustique spécifique à la soupape de régulation à l'aide des signaux de mesure respectivement produits par les unités de microphone optique.

2. Soupape de régulation selon la revendication 1, **caractérisée en ce que** le microphone optique (51) est conçu pour mesurer une pression acoustique optiquement par la détection de la modification de l'indice de réfraction de l'air dans le déroulement des ondes acoustiques du signal de fonctionnement acoustique spécifique à la soupape de régulation.

3. Soupape de régulation selon la revendication 1 ou 2, **caractérisée en ce que** le microphone optique (51) est disposé dans une conduite pneumatique d'un système d'actionneur pneumatique de la soupape de régulation, et/ou **en ce que** le microphone optique (51) est disposé dans une chambre de travail pneumatique (31) d'un actionneur pneumatique (5) de l'appareil de régulation.

4. Soupape de régulation selon l'une des revendications précédentes, **caractérisée en ce que** l'agencement d'au moins deux unités de microphone optique est couplé au dispositif de diagnostic (55) par transmission de signaux, lequel exécute la résolution tridimensionnelle du champ acoustique de manière à localiser une source acoustique et/ou à déterminer une vitesse acoustique.

5. Soupape de régulation selon l'une des revendications précédentes, **caractérisée par** un dispositif d'ajustement destiné à déplacer au moins une partie du microphone optique (51) par rapport à un champ acoustique à emplacement défini sur l'appareil de régulation, dans laquelle le dispositif d'ajustement comporte un entraînement (61) pourvu d'un matériau piézoélectrique et/ou alimenté en énergie électrique collectée à partir du flux de fluide de processus ou d'une source d'énergie auxiliaire.

6. Soupape de régulation selon l'une des revendications précédentes, **caractérisée en ce que** celle-ci comporte en outre un capteur de bruits structurels piézoélectrique ou un capteur acoustique avec membrane, dont les données de mesure sont transmises au dispositif de diagnostic (55), afin d'évaluer le traitement du signal de mesure produit par le microphone optique (51).

7. Soupape de régulation selon l'une des revendications précédentes, **caractérisée en ce que** le microphone optique (51) comporte une source de lumière (63) ainsi qu'une tête de mesure (71), lesquelles sont couplées de telle façon par le biais d'une fibre optique en particulier flexible que la source de lumière (63) et la tête de mesure (71) peuvent être déplacées l'une vers l'autre, dans laquelle la tête de mesure (71) présente au moins un diviseur de faisceau (75) permettant de produire un premier faisceau lumineux (77) exposé aux ondes acoustiques du signal de fonctionnement acoustique, et un deuxième faisceau lumineux (81) suivant au moins partiellement un trajet protégé contre les ondes acoustiques.

8. Procédé de contrôle de la capacité fonctionnelle d'une soupape de régulation réalisée selon l'une des revendications précédentes, laquelle influence un flux de fluide de processus d'une installation industrielle ;
dans lequel un signal de fonctionnement acoustique spécifique à la soupape de régulation est mesuré sans membrane à l'intérieur d'un boîtier de la soupape de régulation, lequel est traversé par le fluide de processus, et/ou dans une conduite de fluide de processus (15, 17) de l'installation industrielle, à l'aide d'un rayonnement électromagnétique influencé par le signal de fonctionnement acoustique spécifique à la soupape de régulation ; et
un signal de mesure électrique dépendant du signal de fonctionnement acoustique spécifique à la soupape de régulation est produit sans membrane.

9. Procédé selon la revendication 8, **caractérisé en ce que** celui-ci est exécuté selon le mode de fonctionnement de la soupape de régulation réalisée selon l'une des revendications précédentes.

10. Installation industrielle comportant :
- un système de tuyaux avec une conduite de fluide de processus (15, 17) ;
- une soupape de régulation intégrée au système de tuyaux, destinée à influencer un flux de fluide de processus de l'installation industrielle, la soupape de régulation présentant un manchon (15) pour une conduite d'entrée de flux et un manchon (17) pour une conduite de sortie de flux, la soupape de régulation présentant en outre un système de diagnostic destiné à contrôler la capacité fonctionnelle de la soupape de régulation, le système de diagnostic comportant :
∘ un microphone optique (51) attribué à la soupape de régulation, lequel mesure un signal de fonctionnement acoustique spécifique à la soupape de régulation à l'aide d'un rayonnement électromagnétique influencé par le signal de fonctionnement acoustique spécifique à la soupape de régulation, le microphone optique (51) produisant un signal de mesure électrique dépendant du signal de fonctionnement acoustique spécifique à la soupape de régulation ; et
∘ un dispositif de diagnostic électronique (55) destiné à recevoir et enregistrer, traiter et/ou transmettre le signal de mesure électrique, le microphone optique (51) étant conçu sans membrane,
∘ dans laquelle le microphone optique (51) est disposé à l'intérieur d'un boîtier de la soupape de régulation, lequel est traversé par le fluide de processus, et/ou dans la conduite de fluide de processus (15, 17) de l'installation industrielle,
∘ dans laquelle le microphone optique (51) est formé par un agencement d'au moins deux unités de microphone optique, pour la résolution tridimensionnelle d'un champ acoustique du signal de fonctionnement acoustique spécifique à la soupape de régulation à l'aide des signaux de mesure respectivement produits par les unités de microphone optique.

11. Installation industrielle selon la revendication 10, dans laquelle la soupape de régulation est réalisée selon l'une des revendications 2 à 7.
